# EUROPEAN PATENT APPLICATION

(11) **EP 1 560 458 A1**
(43) Date of publication of application: **03.08.2005**
(21) Application number: 04001695.8
(22) Date of filing: 27.01.2004
(51) Int. Cl.: H04Q 11/04, H04M 7/00, H04M 3/48

(54) **Method, network arrangement and apparatus for providing ISDN services in next generation packet based telecommunications networks**

(71) Applicant: SIEMENS AKTIENGESELLSCHAFT, 80333 München (DE)
(72) Inventor: Stupka, Jean-Marie, 82110 Germering (DE)

(57) **Abstract**

The present invention relates to a method, apparatus (108, 208) and network arrangement for providing ISDN services in next generation packet based telecommunication networks (100, 200). More particularly, the invention relates to a method and network arrangement for providing ISDN services in a NGN, wherein at least one local exchange function application server (108, 208) is configured to provide ISDN services to terminal equipment (102, 202) by means of a relation that is established between the local exchange function application server (108, 208) and the terminal equipment (102, 202) upon invocation of the ISDN service.

## Description

The present invention relates to a method, apparatus and network arrangement for providing ISDN services in next generation packet based telecommunication networks. More particularly, the present invention relates to an optimized method, apparatus and network arrangement for facilitating ISDN services which cannot by provided by the next generation network's standard approach to implement services as terminal features rather than network features.

Modern communications networks generally carry two types of traffic or data. The first is the traffic which is transmitted by or delivered to a user or subscriber, and which is usually paid for by the user. That type of traffic is widely known as user traffic or subscriber traffic. The second is the traffic caused by network management applications in sending and receiving management data from network elements, known as management traffic.

In telecommunications, the management traffic is also known as signaling traffic. The term "signaling" refers to the exchange of signaling messages between various network elements such as database servers, local exchanges, transit exchanges and user terminals. A well known protocol for transferring such signaling messages is the Signaling System 7 (SS7), also referred to as Common Channel Signaling System 7 (CCS7).

The Signaling System 7 as specified by the International Telecommunication Union (ITU) in the Q.700-series standards provides for all signaling tasks in today's telecommunications networks. More specifically, SS7 provides for example for:
- basic call setup, management, and tear down;
- enhanced call features such as call forwarding, calling party name/number display, and three-way calling;
- accounting and billing;
- database operations for services such as authentication, roaming, toll-free services and special tariff services;
- network management for the SS7 network and its connections; and
- non-call related signaling, allowing for services such as short message service (SMS), ISDN Supplementary Services and user-to-user signaling (UUS).

With the advent of "next generation" packet based telecommunications networks, and internet protocol based networks in particular, new signaling protocols were developed by the ITU and other standards bodies such as IETF, ETSI, and 3GPP. These recently developed signaling protocols include ITU-T H.323 and SIP (Session Initiation Protocol) by IETF.

The functional architecture of such Next Generation Networks (NGN) seeks to provide a technology independent architecture for supporting multimedia services. The intention is to support a wide range of voice and data services while providing inter-working with legacy networks and/or legacy devices.

For session-oriented control, necessary for applications such as voice, it is generally envisaged to base the NGN architecture on the IMS (IP multimedia subsystem) as standardized by 3GPP. In its general form, the IMS is an architecture for session-based communications using SIP. It is generally believed that this architecture will be the underlying architecture of any mobile NGN approach.

In IMS, session-based communication is handled via a SIP infrastructure, in which, for example, so called applications are accessible by means of SIP. The basic service concept of SIP, as is well known, is to execute the SIP services either in a peer-to-peer fashion between SIP end-user equipment, or in a client-server fashion between SIP end-user equipment and an application server.

In general, any NGN, and a SIP based NGN in particular, is not configured to provide native support for all "legacy" services provided for by the circuit switched PSTN/ISDN communications networks. However, telecom operators and subscribers expect the NGN to at least support all existing PSTN/ISDN services, in addition to any new NGN service. In a first migration step from circuit switched PSTN to NGN, operators wish to replace the circuit switched core network by a NGN and to connect the legacy end-user equipment of their subscribers to the NGN by means of access gateways. Operators demand this transition to be transparent to subscribers, i.e. subscribers with legacy terminal equipment are not supposed to notice any change at all. Consequently, all currently offered PSTN/ISDN services need to be supported in an NGN.

While it appears simple to support these services in an NGN, it actually poses an enormous challenge, because the SIP service concept is fundamentally different from the PSTN/ISDN service concept. As a result, several ISDN supplementary services including CCBS (Call Completion to Busy Subscribers), CCNR (Call Completion on No Reply), MCID (Malicious Caller Identification) and LI (Lawful Interception), are not currently supported within NGN environments.

It is therefore an object of the present invention to provide a novel method for providing ISDN services in a next generation telecommunications network. It is a further object of the invention to provide a novel network arrangement facilitating ISDN services in a next generation telecommunications network. It is yet another object of the invention to provide a novel application server for supporting ISDN services in a next generation telecommunications network.

In accordance with the foregoing objectives, there is provided by the invention a method for providing ISDN services in a next generation packet based telecommunications network comprising at least a session control and one or more application servers. The method comprises the steps of:
- providing at least one local exchange function application server;
- if an ISDN service is invoked with respect to or from a terminal equipment or end-user equipment, establishing a relation between said terminal equipment and said application server, wherein establishing the relation is controlled by the session control using a session control protocol; and
- providing the ISDN service between the local exchange function application server and the terminal equipment by means of said relation.

In a preferred embodiment, the relation provides notifications about state changes.

The invention method may utilize the subscription procedure as specified for the Session Initiation Protocol (SIP) in RFC 3265 "SIP Specific Event Notification" and in the IETF internet draft draft-ietf-sipping-package-xx.txt "An INVITE Initiated Dialog Event Package for the SIP". Establishing a relation between the terminal equipment and the application server may then be accomplished by subscribing the application server to the terminal equipment and, for some applications, also subscribing the terminal equipment to the application server.

According to the present invention there is also provided network arrangement for a next generation packet based telecommunications network configured for providing ISDN services comprising at least a session control and one or more application servers, wherein at least one application server includes at least one local exchange function application server, the at least one local exchange function application server comprising:
- means for subscribing to terminal equipment via the session control;
- means for receiving subscription requests from terminal equipment via the session control; and
- means for providing the ISDN services between the at least one local exchange function application server and the terminal equipment by means of the subscription(s).

The local exchange function application server may be either an origination local exchange function application server or a destination local exchange function application server or a combination of both, as required by the specific ISDN service. That next generation network origination local exchange function application server represents the functionality of a PSTN/ISDN network origination local exchange. Likewise, the next generation network destination local exchange function application server represents the functionality of a PSTN/ISDN network destination local exchange.

Preferred ISDN services supported by the present invention are ISDN services that cannot currently be supported by next generation networks, such as CCBS, CCNR, MCID and Lawful Interception.

For each ISDN service, one application server may be provided. Alternatively, more than one ISDN service may be provided by a single application server.

According to the present invention, there is also provided a local exchange function application server for a next generation packet based telecommunications network, comprising:
- means for subscribing to terminal equipment via a session control ;
- means for receiving subscription requests from terminal equipment via the session control ; and
- means for providing the ISDN services between the local exchange function application server and the terminal equipment by means of the subscription(s).

One advantage of the invention is that ISDN services which cannot currently be supported in NGN arrangements may be supported by applying the present invention. At the same time, the invention overcomes several regulatory and privacy problems that would arise if these ISDN services had been implemented in a peer-to-peer fashion.

Further advantages when applying the invention include:
- It is not necessary to produce ISDN/PSTN services standards in NGN.
- There is no need for modifying the SIP end-user equipment. For the end-user equipment, it is sufficient to support the minimum set of standards, as defined by Q.1912.5 profile B and RFC 3265.
- The impact on the SIP protocol is minimized (only minimal enhancements may be required, if any), i.e. no non-standard procedures are required when deploying the present invention.

By establishing a relation between a terminal equipment and a application server, the invention advantageously provides for the monitoring of a state of the subscriber equipment, such as the free-busy-state, as required by several services. Such state information is generally not available to a next generation network.

In the following, the invention will be described in more detail in the form of an advantageous embodiment which is better understood in accordance with the enclosed drawings.
Fig. 1 shows a schematic representation of a network arrangement in accordance with the invention.
Fig. 2 shows a schematic representation of another network arrangement in accordance with the invention.
Figs. 3A-C schematically show the invocation of a CCBS request in different network scenarios.

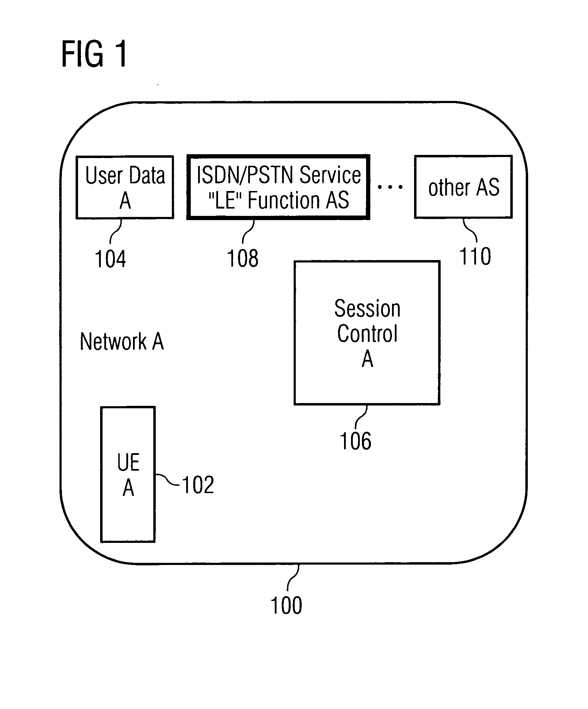

In next generation packet networks as for example shown in Fig. 1, especially those based on SIP, the service intelligence resides in application servers 108, 110 and in the end-user equipment 102. The control network becomes service agnostic. Consequently, the ISDN/PSTN services would become rather a terminal than a network feature.

However, an end-user's equipment 102 is not allowed to receive all ISDN/PSTN service information. Under no circumstances must an end-user's equipment 102 receive information and handle services that would allow a first user to track any other user.

Therefore, services such as CCBS or CCNR that, under the NGN doctrine of implementing services as terminal features rather than network features, would require terminal status information of arbitrary terminals associated with other users to be delivered to the first user's terminal equipment 102, cannot be implemented in a NGN 100 directly. Other services related to privacy such as CLIR (calling line ID restriction) or any other ID restriction features, or services related to regulatory requirements such as MCID or LI, or procedures that would allow surveillance of another user by unauthorized users such as the ability to directly subscribe to another user's state, are also affected.

As shown in Fig. 1, the present invention provides application servers 108, preferably dedicated application servers 108, that emulate for a specific service the functionality performed by an ISDN/PSTN local exchange.

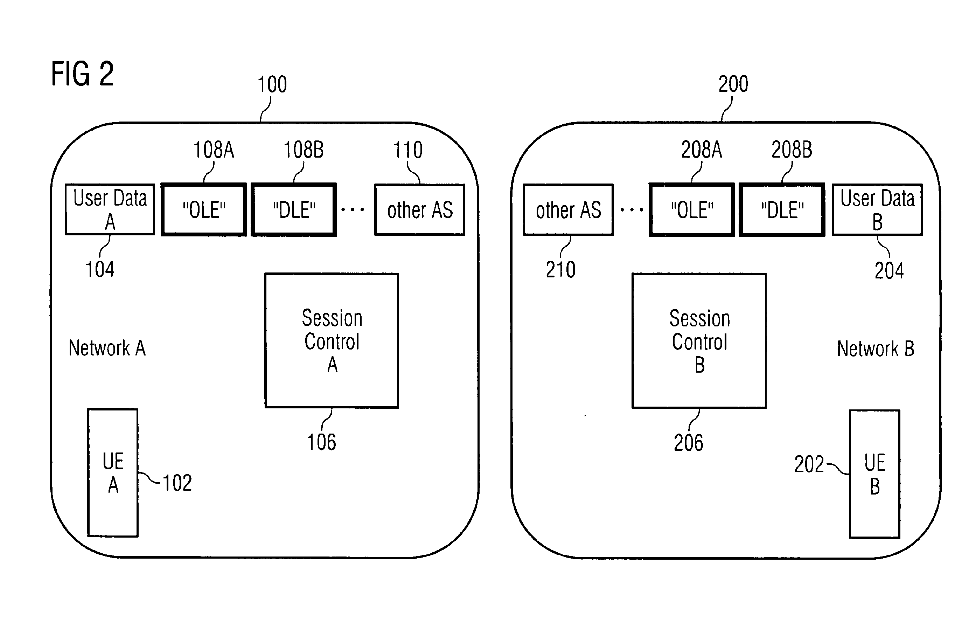

Turning now to Fig. 2, typically the application server in the originating network acts as the originating local exchange (OLE) 108A, 208A and the application server in the terminating network acts as the destination local exchange (DLE) 108B, 208B.

Also shown in Fig. 2 is a first end-user equipment or terminal equipment 102 in a first network 100. First network 100 comprises first session control 106, first user data storage 104 and other application servers 110 for applications such as Short Message Service (SMS), Multimedia Message Service (MMS), Instant Messaging, Presence etc. A second network 200 is shown to be fundamentally similar to first network 100. Second network 200 comprises second end-user equipment 202, second session control 206, second user data storage 104 and other application servers 210.

It shall be understood that the OLE function 108A, 208A and the DLE function 108B, 208B may reside in different application servers. However, since the distinction between "origination" and "destination" is situation-dependent, it is preferred to implement one local exchange function application server (LE function application server) acting as OLE function application server or DLE function application server as required.

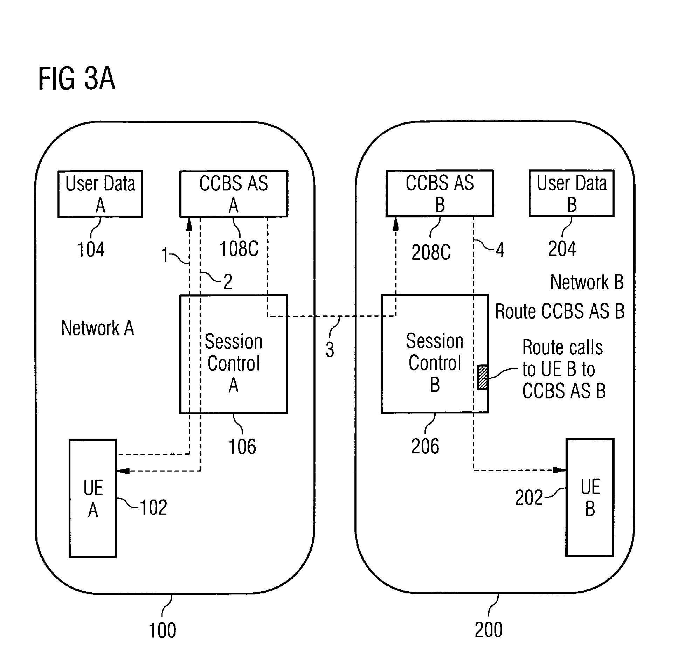

Turning now to Fig. 3A, there is shown the network arrangement of Fig 2, including a basic signaling flow, wherein the CCBS feature is invoked at the first end-user terminal 102.

When the CCBS feature is invoked at the first end-user terminal 102, for example by user request, the first end-user equipment 102 subscribes to a first CCBS application server 108C (step 2). The first CCBS application server may be a specific application server or a function of the LE function application server 108 of Fig. 1. In the following, the subscription procedure is explained with more details.

In IETF RFC 3265 and in the internet draft mentioned above, there is provided a mechanism allowing SIP network nodes 102, 108, 208, 202 to request asynchronous notification of events. In particular, RFC 3265 describes a SIP extension by which nodes 108, 208, 102, 202 can request notification from remote nodes indicating that certain events have occurred at the remote node. The internet draft draft-ietf-sipping-package-xx.txt defines a dialog event package for the SIP Events architecture, along with a data format used in notifications for this package. It allows users to subscribe to another user, and receive notifications about the changes in state of INVITE initiated dialogs that the user is involved in.

As explained above, while technically possible, subscriptions regarding certain status changes are to be prohibited for end-user equipment 102, 202, in order to prevent misuse of subscriptions. Event package subscriptions to end-user equipment 102, 202 should be allowed only from dedicated network nodes such as the LE function application servers 108, 208. CCBS/CCNR application servers 108C, 208C may receive subscriptions, i.e. CCBS/CCNR requests, from end-users within the NGN only, and in this case verify authentication and authorization. CCBS application servers 108C, 208C may also receive subscriptions from another CCBS application server, for example a CCBS application server located in a different NGN (step 6 of Fig. 3A).

A CCBS application server 108C, 208C may preferably be configured to monitor only users within its own NGN, i.e., a CCBS application server may only send event package subscriptions to end-user equipment 102, 202 within the same NGN 100, 200.

If CCBS/CCNR is requested for a user within the same NGN (not shown), 200, all CCBS/CCNR procedures are handled by the same CCBS/CCNR application server 108C, 208C of that NGN 100, 200. That is, the CCBS/CCNR application server 108C, 208C acts both as the originating CCBS/CCNR application server and as the terminating CCBS/CCNR application server. The functionality provided for by the CCBS/CCNR application server is similar to the functionality provided by the local exchanges for CCBS/CCNR.

Turning again to Figs. 3A-C, the message flow shown in general for three different network arrangements will be explained in detail below:
**CCBS Activation - Step 1:** Subscription of first terminal equipment 102 (UE A) to first CCBS application server 108C (CCBS AS A)

### Actions at UE A 102

To activate CCBS with respect to a destination B user, UE A 102 shall send an event package subscription for user B including a session description to the CCBS application server 108C within its NGN 100. Addressing is by the URL of the CCBS application server 108C and the message is routed through session control 106 that includes its address in a Record Route Header. UE A 102 shall obtain the address of the CCBS application server 108C dynamically at boot time (DHCP) or the address shall be entered at set-up.

### Actions at application server CCBS AS A 108C

CCBS AS A 108C shall authenticate and authorize the request. If UE A 102 has not subscribed to the CCBS supplementary service then CCBS AS A 108C shall reject the request.

CCBS AS A 108C shall maintain a list of all outstanding CCBS requests. If UE A 102 has already reached the maximum allowed number of outstanding requests (in an example: network option with a maximum value of 5) then CCBS AS A 108C shall reject the request.

If the request is allowed, CCBS AS A 108C shall acknowledge the subscription to UE A 102 with a 200 OK message. In addition, CCBS AS A 108C shall send a NOTIFY message to the UE A 102 with current state information. This NOTIFY message is mandated by RFC 3265 and is aimed at solving the Heterogeneous Error Response Forking Problem (HERFP). UE A 102 shall acknowledge this NOTIFY message with a 200 OK message.

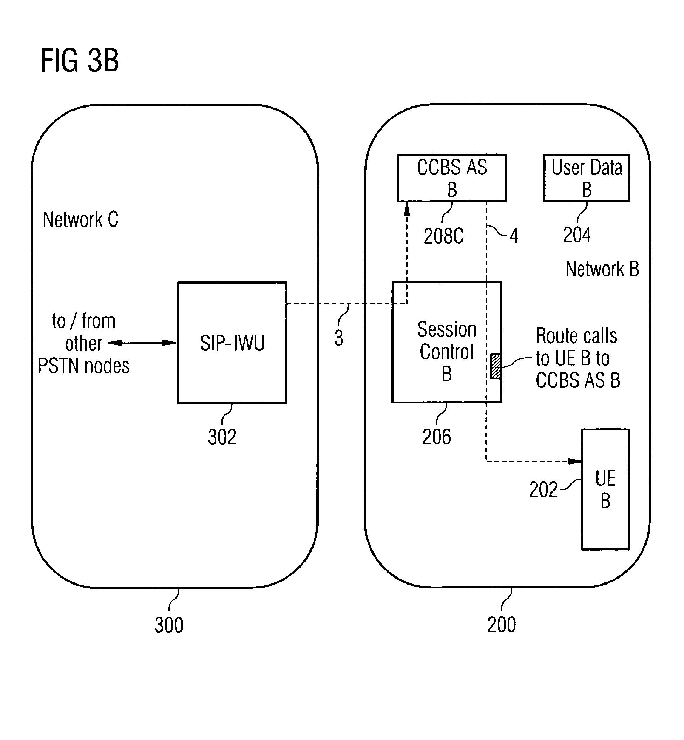

Note: SIP cannot carry the "CCBS possible" information that is used in the ISDN/PSTN. Therefore, a CCBS request accepted by CCBS AS A 108C may be rejected subsequently by the CCBS application server 208C in the destination NGN 200 or by the destination ISDN/PSTN 300 in case of inter-working with an ISDN/PSTN 300 (see Fig. 3B), for example if user B's incoming CCBS queue is full or CCBS is not available in the destination network 300 or if there are supplementary services that preclude CCBS.

If the CCBS request is rejected subsequently or deactivated at any time by the network, for example because a CCBS service duration timer has expired, then CCBS AS A 108C shall inform UE A 102 of this deactivation. This may be achieved by means of an INFO message.

For any CCBS request from first end-user equipment 102 to second end user equipment 104, CCBS AS A 108C shall check if such CCBS request already exists. If a request already exists, then the original request shall be retained with the new request being ignored and user A shall be informed that CCBS is already active. If no CCBS request exists, then CCBS AS A 108A shall treat this request as a new request.

**CCBS Activation - Step 2:** Subscription of first CCBS application server 108C (CCBS AS A) to first terminal equipment 102 (UE A)

For CCBS, the application server CCBS AS A 108C has a functionality similar to the functionality of an A-side local exchange. It therefore requires knowing the current state (free, busy) of user A, which is not automatically available in the NGN 100. Therefore, CCBS AS A 108C subscribes to the state of the first user terminal 102.

### Actions at application server CCBS AS A

If CCBS AS A 108C has accepted the CCBS request from UE A 102, then CCBS AS A 108C shall subscribe to the free-busy state of UE A 102, if not already done earlier, triggered by a former and still active outstanding or incoming CCBS or CCNR request.

**CCBS Activation - Step 3:** Subscription of first CCBS application server 108C (CCBS AS A) to second CCBS application server 208C (CCBS AS B)

### Actions at application server CCBS AS A

If CCBS AS A 108C has accepted the CCBS request from UE A 102, then CCBS AS A 108C shall forward the CCBS request (which, in fact, is a subscription request to the state of destination UE B 202) to user B's network 200. After the subscription is accepted by user B's network 200, CCBS AS A 108C shall start a CCBS service duration timer (the duration indicated in the SUBSCRIBE message to the destination network, typically 15-45 minutes).

### Actions at application server CCBS AS B

The SUBSCRIBE message shall be routed to CCBS AS B 208C. CCBS AS B 208C shall queue the incoming CCBS requests to users within the NGN 200. If for UE B 202 the maximum allowed number of incoming requests is already exceeded (in an example: network option with a maximum value of 5), then CCBS AS B 208C shall reject the request.

CCBS AS B 208C may perform a compatibility check and reject the request if the capabilities at UE B 202 are not compatible with the received session description.

CCBS AS B 208C shall have access to the service profile in the user database 204 of UE B 202 to be able to reject a CCBS request if UE B 202 has invoked services that conflict with the request such as Call Forwarding Unconditional (CFU). For an IMS architecture, the application server could access the current profile from the HSS through the Sh Interface.

If the request is not allowed, then CCBS AS B 208C shall deactivate the CCBS request towards first network 100. If the request is allowed, then CCBS AS B 208C shall acknowledge the request to first network 100 and start the CCBS service supervision timer (60 minutes). CCBS service supervision timer is only meaningful if expiry of the CCBS service duration timer has not been notified to CCBS AS B 208C. CCBS AS B receives notification of the expiry of the CCBS service duration timer of user A's network 100 as a CCBS deactivation request, i.e. by receiving a SUBSCRIBE message with a duration of 0.

### Actions at an originating ISDN/PSTN Gateway SIP-IWU

Turning now to Fig. 3B, there is shown an inter-working case between ISDN/PSTN 300 comprising a SIP Inter-Working Unit (SIP-IWU) 302, wherein a CCBS is originating in ISDN/PSTN 300. Upon reception of a CcbsRequest invoke component in a TCAP message from a PSTN node (not shown), SIP-IWU 302 shall send a subscription request (SUBSCRIBE message) to the destination network 200. If the subscription is accepted by the destination network 200, i.e. by CCBS AS B 208C, SIP-IWU 302 shall return a CcbsRequest return result component in a TCAP message to the originating PSTN node. Procedures within the ISDN/PSTN are according to Q.733.3 and Q.953.3.

Note: SIP cannot carry the "CCBS possible" information sent in the PSTN/ISDN, and SIP-IWU 302 has transit functionality only. Therefore, a CCBS request accepted by CCBS AS B 208C at this time may be rejected subsequently if the subscription of CCBS AS B 208C to the state of UE B 202 fails.

### Actions at a destination ISDN/PSTN Gateway SIP-IWU

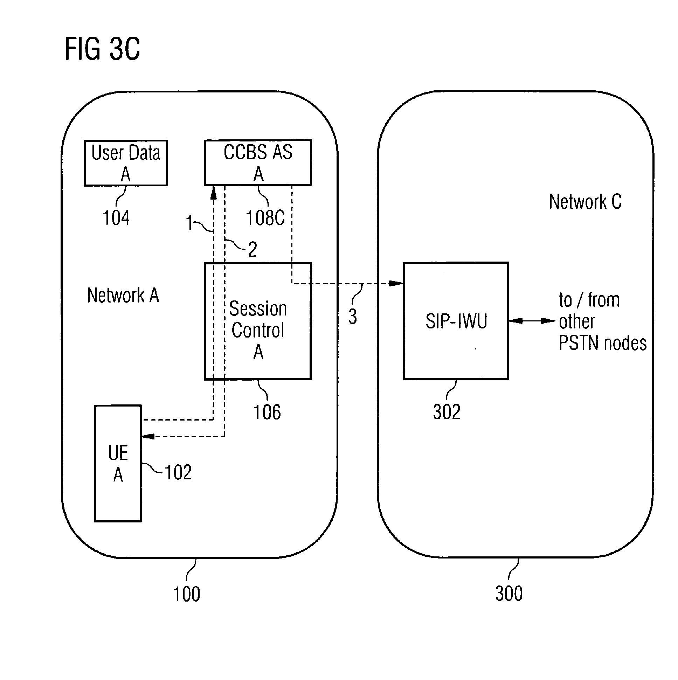

Turning now to Fig. 3C, there is shown another inter-working case between ISDN/PSTN 300, wherein ISDN/PSTN is a destination network to a CCBS request. SIP-IWU 302 shall immediately respond to a SUBSCRIBE message for the CCBS request with 200 OK message. In addition, SIP-IWU 302 shall send a NOTIFY message with current state information. This NOTIFY message is mandated by RFC 3265 and is aimed to solve the Heterogeneous Error Response Forking Problem (HERFP). The NOTIFY shall be acknowledged with a 200 OK message.

Note: SIP cannot carry the "CCBS possible" information used in the ISDN/PSTN 300 and SIP-IWU 302 has transit functionality only. Therefore, a CCBS request accepted by the SIP-IWU 302 at this time may be rejected subsequently by the destination ISDN/PSTN if, for example, the incoming CCBS queue at a PSTN/ISDN destination is full or CCBS is not available in the destination network 300 or there are supplementary services that preclude CCBS.

SIP-IWU 302 shall then request activation of the CCBS supplementary service at the destination node by sending a CcbsRequest invoke component (TC message) according to the procedures defined in Recommendation Q.733.3. Procedures within the ISDN/PSTN are according to Q.733.3 and Q.953.3.

**CCBS Activation - Step 4:** Subscription of second CCBS application server 208C (CCBS AS B) to second terminal equipment 202 (UE B)

By subscribing to the state of UE B 202, application server CCBS AS B 208C starts monitoring the state of UE B 202.

### Actions at application server CCBS AS B

Once CCBS AS B 208C has accepted the CCBS request from the first network 100, then CCBS AS B 208C shall subscribe to the free-busy state of UE B 202 and update the service profile of UE B 202 in the user database 204 with the "CCBS active" information. Furthermore, if not already present from a former CCBS or CCNR request, a "Route to CCBS AS B" information shall be set in the Session Control 206 so that all subsequent calls (INVITE) to destination B will be routed to CCBS AS B 308C that shall then reject them (486 BUSY). This is to avoid new calls to seize UE B 202 during a CCBS recall and before the notified UE A 102 makes the CCBS call. In an IMS environment, the application server could write the change of the profile to the HSS through the Sh Interface. The HSS should then update the user profile in the Session Control by using the push mechanism at the Cx interface.

**CCBS Invocation and Operation:** Notification "B free for A" (not shown)

### Actions at application server CCBS AS B 208C

When UE B 202 becomes free or when UE B 202 is free and either of the following occurs:
- a CCBS request is received; or
- a CCBS request becomes not suspended,
then CCBS AS B 208C shall process the CCBS queue of UE B, provided that an entry in the CCBS queue of UE B is not currently being processed. Entries shall not be processed in parallel. The CCBS requests in the CCBS queue of UE B shall be processed in the order in which they are received. During the processing of the CCBS queue of UE B, CCBS requests, which are currently suspended, shall be ignored (suspension and resuming of CCBS requests is described further below).

CCBS AS B 208C shall start the UE B idle guard timer (0-15 seconds). If, upon expiry of the UE B idle guard timer, UE B is no longer free, for example, user B makes an outgoing call, then servicing of the CCBS queue of UE B shall be deferred until UE B becomes not busy again.

If, upon expiry of the UE B idle guard timer, UE B is still free, then the originating network 100 shall be informed, i.e. CCBS AS B 208C shall send a NOTIFY indicating "User B free" to first network 100. Then the destination CCBS recall timer shall be started, with a duration 20 seconds + some seconds for notification to UE A 102 and CCBS call set-up. The CCBS recall timer at CCBS AS B 208C server is only meaningful if expiry of the CCBS recall timer has not been notified to CCBS AS B 208C. The first network 100 notifies the expiry of the CCBS recall by deactivating the CCBS request, i.e. server CCBS AS B 208C would normally receive a SUBSCRIBE message with a duration of 0.

While the idle guard timer is running and also while awaiting the CCBS call to UE B, a new incoming call shall be routed from second Session Control 206 to CCBS AS B 208C. For that purpose, the "Record Route: CCBS AS B" information was previously set in second Session Control 206 during CCBS activation. For such incoming calls, the called UE B 202 shall be considered busy and the calling user shall be informed as required by basic call procedures, i.e. server CCBS AS B 208C shall reject the new incoming call with 486 BUSY.

If, for any reason, no CCBS call results from the processing of a CCBS request, then provided that UE B 202 is still free, the next request in the CCBS queue of UE B shall be selected for processing. This procedure shall be repeated until all entries of the CCBS queue of UE B are processed.

If, for any reason, no CCBS call results from the processing of a CCBS request and UE B 202 is no longer free, then CCBS AS B 208C shall wait for UE B 202 becoming free again.

If all entries of the CCBS queue of UE B have been processed and no CCBS call results, then processing is complete. If there are no more active (not suspended) CCBS and/or CCNR requests with respect to UE B 202 in the queue, CCBS AS B 208C shall update the profile of UE B 202 in the second user database 204. The second user database 202 shall then update the profile in second Session Control 206.
If requests which are not suspended exist in the CCBS queue of UE B, then:
- if UE B 202 is busy, CCBS AS B 208C shall wait for UE B 202 becoming free again; or
- if UE B is free, then the CCBS queue of UE B shall be processed.

### Actions at application server CCBS AS A 108C

CCBS AS A 108C shall acknowledge the "B user free" notification message. Then the procedures described in as "CCBS Invocation and Operation - Step 6a: CCBS Call" are invoked.

### Actions at the originating ISDN/PSTN Gateway SIP-IWU

SIP-IWU 302 when acting as a IWU for a CCBS request originating in ISDN/PSTN 300 (see Fig. 3B) shall acknowledge the "B user free" notification message received from the destination network 200. Then SIP-IWU 302 sends a RemoteUserFree invoke component to the originating node. Procedures within the ISDN/PSTN are according to Q.733.3 and Q.953.3.

### Actions at the destination ISDN/PSTN Gateway SIP-IWU

If SIP-IWU 302, when acting as IWU for PSTN/ISDN 300 that is a CCBS request destination, receives a RemoteUserFree invoke component from the destination node, then SIP-IWU 302 shall send a "B user free" notification message to the originating network 100. Procedures within the ISDN/PSTN are according to Q.733.3 and Q.953.3.

### CCBS Invocation and Operation: CCBS Call (not shown)

### CCBS RECALL: Actions at application server CCBS AS A 108C

On reception of a NOTIFY message with "User B free" from second network 200 or third network 300 in case of inter-working with PSTN/ISDN, CCBS AS A 108C shall check the free-busy state of UE A 102.

If UE A is neither busy nor CCBS busy (i.e. no CCBS recall is pending on UE A), then CCBS AS A 108C shall send a NOTIFY message to UE A (CCBS Recall) with an indication to which CCBS request it applies. Then the CCBS recall timer (10 to 20 seconds) shall be started.

### CCBS CALL: Actions at user equipment UE A 102

If the CCBS recall is accepted at UE A 102 before the CCBS recall timer expires, then UE A 102 shall initiate call set-up to UE B by sending an INVITE to UE B with CCBS AS A 108C in the Route Header.

### CCBS CALL: Actions at application server CCBS AS A 108C

If the CCBS recall is not accepted at UE A 102 before the CCBS recall timer expires, CCBS AS A 108C cancels the CCBS request towards second network 200 or third network 300 by sending a SUBSCRIBE with a duration of 0.

If the CCBS recall is accepted at UE A before the CCBS recall timer expires, then on reception of the INVITE message from UE A 102, CCBS AS A 108C stops the CCBS recall timer and relays the INVITE message with its address included in a Record Route Header towards second or third network 200 or 300. Basic call procedures apply.

Upon reception of a 200 OK message, CCBS AS A 108C considers the CCBS request as completed, deletes the request from its outstanding CCBS request list, stops the CCBS service duration timer and relays the 200 OK message (without inclusion of its address in a Record Route Header) to UE A 102.

If UE A 102 has no more outstanding and/or incoming CCBS and/or CCNR requests, then CCBS AS A 108C shall cancel the subscription to the state of UE A by sending a SUBSCRIBE with a duration of 0 to UE A 102.

### CCBS CALL: Actions at application server CCBS AS B 208C

On reception of the INVITE message from the originating network, either of the first or third network 100, 300, with a CCBS server address in a Record Route Header (e.g. CCBS-server@..., CCBS-IWU@...), CCBS AS B 208C stops the CCBS recall timer and relays the message towards UE B 202 with its address included in a Record Route Header. Basic call procedures apply.

If the call cannot be established because UE B is again busy or if the call fails for any other reason, the call shall be cleared according basic call procedures. Furthermore, the CCBS request shall be deactivated. Note: the retention option is not supported because the retention option cannot be negotiated between the originating and the destination network (not carried in SIP).

If the call can be established, then if a 200 OK message is received from UE B 202, CCBS AS B 208C considers the CCBS request as completed, deletes the request from its incoming CCBS request queue, stops the CCBS service supervision timer and relays the 200 OK message (without inclusion of its address in a Record Route Header) to the originating network 100, 300.

If UE B 202 has no more incoming and/or outstanding CCBS and/or CCNR requests, i.e., CCBS AS B 208C does no longer require free-busy state information from UE B, then CCBS AS B 208C shall cancel the subscription to the state of UE B by sending a SUBSCRIBE with a duration of 0.

If UE B 202 has no more active (not suspended) incoming CCBS and/or CCNR requests the server CCBS AS B shall update the current profile (no incoming CCBS/CCNR requests) in the user database 204. The user database 204 shall then update the profile of UE B 202 by deleting the "Record Route: CCBS AS B" in second Session Control 206 as subsequent calls to UE B 202 need not to be routed to CCBS AS B.

### CCBS CALL: Actions at originating ISDN/PSTN Gateway SIP-IWU

Procedures within the ISDN/PSTN are according to Q.733.3 and Q.953.3. If an originating PSTN/ISDN user does not accept the CCBS recall before the CCBS recall timer expires, SIP-IWU 302 receives a CcbsCancel invoke component in a TCAP message from the originating node and shall cancel the CCBS request towards the second network 200 by sending a SUBSCRIBE with a duration of 0.

If an originating PSTN/ISDN user has accepted the CCBS recall before the CCBS recall timer expires, then SIP-IWU 302 receives an IAM message, including the CCBS call indicator from the originating node. On reception of this IAM message, SIP-IWU 302 sends an INVITE message with its address included (e.g. CCBS-IWU@...) in a Record Route Header towards the destination network 200. Basic call procedures apply. Upon reception of a 200 OK message, SIP-IWU 302 sends an ANM message to the originating node.

### CCBS CALL: Actions at destination ISDN/PSTN Gateway SIP-IWU

On reception of the INVITE message from first network 100 with a CCBS server address in a Record Route Header, SIP-IWU 302 sends an IAM message including the CCBS call indicator towards the destination node. Procedures within the ISDN/PSTN are according to Q.733.3 and Q.953.3. Procedures towards the originating network are according Q.1912.5.

If the call cannot be established because user B is again busy or if the call fails for any other reason, the call shall be cleared according basic call procedures. Furthermore, the CCBS request shall be deactivated by sending a SUBSCRIBE with a duration of 0 to the originating network. Note: the retention option is not supported because the retention option cannot be negotiated between the originating and the destination network (not carried in SIP).

**CCBS Invocation and Operation:** CCBS Suspend/Resume (not shown)

### Actions at application server CCBS AS A 208C

CCBS AS A 108C shall check the state of UE A 102. If UE A 102 is busy or CCBS busy, i.e. a CCBS recall is pending on user A, then CCBS AS A 108C shall send a SUSPEND message (see note below) to the destination network 200, 300 with an indication to which CCBS request it applies.

In case the originating network 100 has sent several SUSPEND messages to different destination networks 200,300 and UE A 102 becomes neither busy nor CCBS busy, the originating network 100 shall send a RESUME message (see note below) to destination network 200, 300 for each suspended CCBS request for which a compatible terminal at UE A 102 is neither busy nor CCBS busy.

Note: RFC 3265 does not provide for a Suspend/Resume mechanism. If future versions of RFC 3265 do not provide for SUSPEND and RESUME messages, the following procedure may be implemented: sending a SUBSCRIBE message with an erroneous duration for CCBS requests that are to be suspended or resumed. If a CCBS server 208C at the destination network 200 or a SIP-IWU 302 in case of SIP-ISDN inter-working receives a SUBSCRIBE with a duration of 100 hours, this SUBSCRIBE should be interpreted as a SUSPEND message. If a SUBSCRIBE with a duration of 99 hours is received, this SUBSCRIBE should be interpreted as a RESUME message.

### Actions at application server CCBS AS B (208C)

On reception of a SUSPEND message (or an equivalent SUBSCRIBE as described above) for a CCBS request, CCBS AS B 208C shall acknowledge the message and suspend the corresponding entry in the incoming CCBS queue and select the next CCBS request in the queue.

On reception of a RESUME message (or an equivalent SUBSCRIBE as described above) for a CCBS request, CCBS AS B 208C shall acknowledge the message and reactivate the corresponding entry in the incoming CCBS queue. If at that time UE B 202 is not busy nor any other CCBS request from the same queue is being processed, then the queue of UE B shall be processed again without starting the destination B idle guard timer.

### Actions at originating ISDN/PSTN Gateway SIP-IWU

Procedures within the ISDN/PSTN 300 are according to Q.733.3 and Q.953.3. If SIP-IWU 302 receives a CcbsSuspend invoke component in a TCAP message from the originating PSTN node, then SIP-IWU 302 shall relay it to the destination network 200 with a SUSPEND message (see note above with respect to using a SUBSCRIBE message instead).

If SIP-IWU 302 receives a CcbsResume invoke component in a TCAP message from the originating PSTN node, then SIP-IWU 302 shall relay it to the destination network with a RESUME message (see note above with respect to using a SUBSCRIBE message instead).

### Actions at destination ISDN/PSTN Gateway SIP-IWU

On reception of a SUSPEND message (or an equivalent SUBSCRIBE as described above) for a CCBS request, SIP-IWU 302 shall acknowledge the message and relay it with a CcbsSuspend invoke component to the destination PSTN node. Procedures within the ISDN/PSTN are according to Q.733.3 and Q.953.3.

On reception of a RESUME message (or an equivalent SUBSCRIBE as described above) for a CCBS request, SIP-IWU 302 shall acknowledge the message and relay it with a CcbsResume invoke component to the destination PSTN node. Procedures within the ISDN/PSTN are according to Q.733.3 and Q.953.3.

### CCBS Deactivation

A CCBS request shall be deactivated if deactivation of the CCBS request is requested at UE A 102. UE A shall be informed that the deactivation is successful.

A CCBS request shall be automatically deactivated by the network(s) 100, 200, 300 and UE A 102 shall be informed thereof, if:
- the CCBS service duration timer expires; or
- the CCBS recall is not accepted at UE A 102 before the CCBS recall timer expires; or
- UE B 202 or, in case of inter-working, the PSTN destination, invokes a service that conflicts with the existing CCBS request and deactivation becomes necessary.

UE A shall only be given information about deactivation of a CCBS request if it would have been given the CCBS recall associated with that CCBS request.

Deactivation of a CCBS request is done by sending a SUBSCRIBE message with a duration of 0 to the user or network element where subscription is active. In case of SIP-ISDN/PSTN inter-working, the SUBSCRIBE/NOTIFY mechanism is mapped onto a CcbsCancel invoke component of a TCAP message and vice versa.

Procedures within the ISDN/PSTN are according to Q.733.3 and Q.953.3.

**CCBS Deactivation by the served user:** Cancel subscription of first terminal equipment 102 (UE A) to first CCBS application server 108C (CCBS AS A) (not shown)

### Actions at user equipment UE A

To deactivate a CCBS request UE A 102 shall send a SUBSCRIBE with a duration of 0 to CCBS AS A 108C. If a user at UE A wants to deactivate all outstanding CCBS requests the former procedure has to be repeated for all outstanding requests.

**CCBS Deactivation:** Cancel subscription of first CCBS application server 108C (CCBS AS A) to first terminal equipment 102 (UE A) (not shown)

### Actions at application server CCBS AS A

If UE A 102 has no more incoming and/or outstanding CCBS and/or CCNR requests, then CCBS AS A 108C shall cancel the event package subscription to UE A 102 by sending a SUBSCRIBE with a duration of 0 to UE A 102.

**CCBS Deactivation:** Cancel subscription of first CCBS application server 108C (CCBS AS A) to second CCBS application server 208C (CCBS AS B) (not shown)

### Actions at application server CCBS AS A

CCBS AS A 108C shall cancel the CCBS request towards CCBS AS B 208C by sending a SUBSCRIBE with a duration of 0.

### Actions at originating ISDN/PSTN Gateway SIP-IWU

Procedures within the ISDN/PSTN are according to Q.733.3 and Q.953.3. If SIP-IWU 302 receives a CcbsCancel invoke component in a TCAP message from the originating PSTN node, then SIP-IWU 302 shall send a SUBSCRIBE message with a duration of 0 to the destination network 200.

### Actions at destination ISDN/PSTN Gateway SIP-IWU

If SIP-IWU 302 receives a SUBSCRIBE message with a duration of 0, then SIP-IWU 302 shall send a CcbsCancel invoke component in a TCAP message to the destination PSTN node. Procedures within the ISDN/PSTN are according to Q.733.3 and Q.953.3.

**CCBS Deactivation:** Cancel subscription of second CCBS application server 208C (CCBS AS B) to second terminal equipment 202 (UE B) (not shown)

### Actions at application server CCBS AS B

If UE B 202 has no more incoming and/or outstanding CCBS and/or CCNR requests, i.e., CCBS AS B 208C does no longer require free-busy state information from UE B 202, then CCBS AS B 208C cancels the event package subscription at UE B 208C by sending a SUBSCRIBE with a duration of 0.

If UE B 202 has no more incoming CCBS and/or CCNR requests, then CCBS AS B 208C shall write the update to the current profile (no incoming CCBS/CCNR requests) in the user database 204. The user database 204 shall then update the profile of UE B 202 by deleting the "Record Route: CCBS AS B" in the second Session Control 206 as subsequent calls to UE B 202 no longer need to routed to CCBS AS B 208C.

From the foregoing detailed description of the CCBS procedure it will be obvious to those with skills in the art how to apply the principles of the present invention to other ISDN services, such as, for example, CCNR, MCID and Lawful Interception, that require information on the state of terminal equipment and other information such as the true identity of a calling network equipment.

While the invention has been described using the SIP subscription mechanism as an example, other methods for establishing relations between LE application servers and terminal equipment may be employed without departing from the spirit of the present invention. As an example, for retrieving the true identity of a caller by means of an MCID request, such request could be relayed to a node in the caller's network by standard messages.

It will be appreciated that numerous configurations exist for implementing the application servers in accordance with the present invention. An application server may, for example, be distributed over a set of servers that appear as one single server, to provide for increased performance and/or higher reliability. In large networks, it may further be desirable to provide application servers in different geographical locations and to then assign a first number of terminal equipment to a first application server, a second number of terminal equipment to a second application server etc.

It will be further appreciated that the teachings of the present invention apply in various other network arrangements including, but not limited to, network arrangements including a large number of subscribers, which may also be mobile, and network arrangements employing other session control protocols such as H.323.

## Claims

1. A method for providing ISDN services in a next generation packet based telecommunications network (100, 200) comprising at least a session control (106, 206) and one or more application servers (108, 110, 208, 210), the method comprising the steps of:
- providing at least one local exchange function application server (108, 208);
- if an ISDN service is invoked with respect to or from a terminal equipment (102, 202), establishing a relation between said terminal equipment (102, 202) and said application server (108, 208), wherein establishing the relation is controlled by the session control (106, 206) using a session control protocol; and
- providing the ISDN service between the local exchange function application server (108, 208) and the terminal equipment (102, 202) by means of said relation.

2. The method according to claim 1, wherein the relation provides notifications about state changes.

3. The method according to any of the claims 1 or 2, wherein the step of establishing a relation between the terminal equipment (102, 202) and the application server comprises subscribing the application server (108, 208) to the terminal equipment (102, 202).

4. The method according to any of the claims 1 to 3, wherein the step of establishing a relation between the terminal equipment (102, 202) and the application server comprises subscribing the terminal equipment (102, 202) to the application server (108, 208).

5. The method according to any of the claims 1 to 4, wherein the step of providing the at least one local exchange function application server (108, 208) comprises providing at least one origination local exchange function (108A, 208A).

6. The method according to any of the claims 1 to 5, wherein the step of providing the at least one local exchange function application server (108, 208) comprises providing at least one destination local exchange function (108B, 208B).

7. The method according to any of the claims 1 to 6, wherein the subscriptions are controlled by the Session Initiation Protocol SIP.

8. The method according to any of the claims 1 to 7, wherein the step of providing the at least one local exchange function application server (108, 208) comprises providing separate application servers (108C, 208C) for each ISDN service.

9. A network arrangement for a next generation packet based telecommunications network (100, 200) configured for providing ISDN services comprising at least a session control (106, 206) and one or more application servers (108, 110, 208, 210), wherein at least one application server includes at least one local exchange function application server (108, 208), the at least one local exchange function application server (108, 208) comprising:
- means for subscribing to terminal equipment (102, 202) via the session control (106, 206);
- means for receiving subscription requests from terminal equipment (102, 202) via the session control (106, 206); and
- means for providing the ISDN services between the at least one local exchange function application server (108, 208) and the terminal equipment (102, 202).

10. The network arrangement according to claim 9, wherein the at least one application server includes at least one origination local exchange function (108A, 208A).

11. The network arrangement according to any of the claims 9 or 10, wherein the at least one application server includes at least one destination local exchange function (108B, 208B).

12. The network arrangement according to any of the claims 9 to 11, comprising at least one application server for either or all of the ISDN services CCBS, CCNR, MCID and Lawful Interception.

13. The network arrangement according to any of the claims 9 to 12, comprising separate application servers (108C, 208C) for each ISDN service.

14. A local exchange function application server (108, 208) for a next generation packet based telecommunications network, comprising:
- means for subscribing to terminal equipment () via a session control (106, 206);
- means for receiving subscription requests from terminal equipment (102, 202) via the session control (106, 206); and
- means for providing the ISDN services between the local exchange function application server (108, 208) and the terminal equipment (102, 202).

15. The local exchange function application server according to claim 14, wherein the local exchange function application server comprises an origination local exchange function (108A, 208A).

16. The local exchange function application server according to claim 14, wherein the local exchange function application server comprises a destination local exchange function (108B, 208B).

17. The local exchange function application server according to any of the claims 14 to 16, comprising means for providing either or all of the ISDN services CCBS, CCNR, MCID and Lawful Interception.
